# EUROPEAN PATENT SPECIFICATION

(11) **EP 4 257 831 B1**
(45) Date of publication and mention of the grant of the patent: **18.06.2025**
(21) Application number: 23161578.2
(22) Date of filing: 13.03.2023
(51) Int. Cl.: F16B 2/14, F16B 5/02, F16B 37/04

(54) **PANEL SUPPORT FIXING SYSTEM AND METHOD**
PLATTENTRÄGERBEFESTIGUNGSSYSTEM UND -VERFAHREN
SYSTÈME ET PROCÉDÉ DE FIXATION DE SUPPORT DE PANNEAU

(30) Priority: 05.04.2022 GB 202204973
(43) Date of publication of application: 11.10.2023
(73) Proprietor: Pure Vista Ltd, Bodmin, Cornwall PL31 2QX (GB)
(72) Inventor: Oakes, Mark, Bodmin, PL31 2QX (GB)
(74) Representative: Handsome I.P. Ltd

(56) References cited:
- EP-A1- 3 517 696
- WO-A1-2020/023653
- DE-A1- 2 437 565
- GB-A- 1 269 443
- US-A1- 2016 265 232

## Description

The present invention relates generally to panel support fixing system and a method of supporting panels using said system and finds particular, although not exclusive, utility in positioning and securing flat panels to substrates that are susceptible fracturing e.g. when fixed with a screw.

Substrates that are susceptible to fracturing may include wood, glass or ceramics. The substrate includes a fixing face to which a fixing, such as a screw is to be applied. Substrates susceptible to fracturing may fracture even if a screw with a diameter of less than a quarter of the smallest dimension of the face is screwed into it. This can make robustly attaching larger fixings into the substrate challenging and can also put the integrity of the substrate at risk during fixing.

For example, screwing into wood with any sized screw can result in the wood becoming split. The wood can be pre-drilled to reduce the risk of splitting, but not prevent it. However, if the pre-drilled hole is too small the wood is still relatively likely to split, whereas if the hole is too big the retaining force of the screw may be reduced significantly.

When the substrate forms part of an existing structure or building, this risk can be compounded. For example, if a structural substrate, such as a wooden joist, is split then it must be replaced which is often disruptive, costly and time consuming. This issue can be particularly prominent when fixing balustrades or partitions to substrates susceptible to fracturing.

It is known for balustrades and partitions to be formed from a panel with the weight dominantly supported along a one edge, with little or no support at an opposite edge. Known methods of supporting these panels include placing a lower edge into a trough and clamping the panel in place. It is often desirable to fix the trough to a substrate that is often susceptible to fracturing.

Panels, in particular flat panels, are often made of glass, acrylic, metal, plastics material and/or other hard materials. Such panels may comprise two opposing faces, which may be flat or may be curved, regular or irregular, with a perimeter wall joining the two opposing faces at the edge. The perimeter wall may include a base. It is desirable for these panels to be arranged/aligned vertically, both for aesthetic reasons, and to ensure that their centre of mass acts through their footprint.

Therefore, it is desirable to devise a system that enables an attachment apparatus to enable a bolt to be secured to a substrate susceptible to fracturing.

WO2020/023653 discloses an anchor platform assembly for anchoring an object to a structure. The anchor platform assembly comprises an anchor baseplate, the anchor baseplate comprising a cylindrical post having a bore, wherein a top open end of the bore abuts and is in registry with a bore of the anchor baseplate.

GB1269443 discloses a fastening device for fastening a heavy object to a wall or plate. The fastening device comprises a tube having at one end a collar, wherein a nut is mounted within the tube at the opposite end to the collar, and where the collar and the nut may be fastened to the tube by soldering or welding.

DE2437565 discloses a fastening device for attaching foam parts to rigid support members. The fastening device comprises a rectangular locking plate, which is provided with at least eight recesses. The plate comprises a cylindrical component having a channel passing through the plate.

EP3517696 discloses a fastening system comprising an insulating material fastener for fastening an insulating element to a fastening base and a setting tool. The fastener comprises a holding plate with a receiving hole for receiving a fastening screw as a fastening element. The receiving hole extends along a longitudinal axis L into a receiving sleeve which is arranged on a front side of the holding plate. The fastening screw is used to fasten the insulating material fastener in the fastening base, into which the fastening screw can be screwed directly, as a result of which the holding plate is pressed against the insulating element for fastening.

US2016/265232 discloses a system and method for adjusting the alignment of a panel. The system comprises a first arrangement in which a panel is supported in a trough having side walls and a base. A portion of the lower edge of the panel is gripped by gripping parts, which are urged together and into a tapering slot in the base of the trough by adjustment mechanisms.

According to a first aspect there is provided an attachment apparatus for enabling a bolt to be secured to a substrate that is susceptible to fracturing, the apparatus comprising: a plate with a plurality of openings therethrough, wherein each opening is configured to receive a fixing member, wherein the plate includes a plurality of plate orifices therethrough, wherein the plurality of plate orifices includes a first plate orifice and a further plate orifice, and wherein the plurality of openings include at least two openings in addition to two openings per orifice of the plurality of plate orifices; a receiving member fixedly secured to the plate, the receiving member having a cavity with an aperture at one end that at least partially overlaps the first plate orifice, wherein the receiving member is configured to receive and retain a corresponding bolt such that the corresponding bolt is disposed within the aperture, cavity and the first plate orifice; and a further receiving member with a further aperture at one end that at least partially overlaps the further plate orifice, and wherein the further receiving member is fixedly secured to the plate, wherein each receiving member includes external protrusions and/or external indentations to form an interference fit with the substrate.

In this way, the risk of fracturing a substrate susceptible to fracturing is reduced when securing a bolt thereto. In this way, multiple bolts can be attached to the substrate with a fixed arrangement based on the plate whilst minimising the risk to the integrity of the substrate by using fewer fixings. This may be especially beneficial when fixing two panels close together to set the spacing between said panels. In this way, relatively small mechanical fixings can be used as the load is spread between at least four small mechanical fixings, rather than a larger fixing or two. In this way, the receiving member may more readily form an interference fit with the substrate, and thereby, reduce movement of the apparatus whilst fixing it to the substrate.

A hole for the retaining member can be cut or predrilled into the fixing face of the substrate to allow insertion of said member. Once inserted, the face of the plate permits attachment to the fixing face. The attachment may be achieved using a chemical bond, such as an adhesive or glue, by taking advantage of the overlap between the plate and the fixing face and/or the openings. Alternatively, or additionally the attachment may be achieved using a mechanical fixing, such as a rivet or screw. However, the first plate orifice can be relatively large compared with the openings through the plate. For example, the first plate orifice can be at least double, triple or quadruple the diameter of the plate openings. In this way, large bolts can be removably secured to a substrate without the risk of splitting the substrate with similarly large mechanical fixings.

The plate may have a thickness of no more than 20mm, no more than 10 mm, no more than 5mm or no more than 1mm. The plate may be a metal or plastic plate. The plate may be configured to prevent over insertion of the receiving member into the substrate. Alternatively, or additionally, the plate may be configured to prevent over insertion of a bolt into the receiving member by physically interacting with protrusions of the bolt, for example, the bolt may have a head that protrudes radially.

The bolt may comprise or be formed from metal, plastic, and/or composite materials. The attachment apparatus may comprise or be formed from metal, plastic and/or composite materials. More specifically, the plate, receiving member, and/or fixing member, may comprise or be formed from metal, plastic, and/or composite materials.

The bolt may be, for example, a smooth bolt, a threaded bolt, a toothed bolt and/or a tapered bolt. Alternatively, or additionally, the bolt may be prismatic or frustrumatic. That is, it may resemble a prism or frustrum, respectively. The bolt may comprise a head and/or a shank. The shank may have an exterior surface that is smooth, or threaded, notched and/or otherwise non-smooth. The shank may have a circular cross section, and may be cylindrical and/or tapered. The head may comprise an internal or external screw drive (e.g. Allen-key socket, exterior hex profile, cross head socket, etc.).

The plate may include two opposing faces, each face having an area at least five, ten or twenty times larger than the edges of the plate. The faces of the plate may take any geometric shape, such as a circle, square, triangle, or rectangle. The plate may be flat or planar in use. For example, the plate may be flat or axially flexible to flat.

In some examples the largest dimension of the plate may be at least two times, three times, four times, or five times the size of the largest dimension of the first plate orifice. The plurality of openings through the plate may each cover a smaller area than the first plate orifice, such as less than half or quarter of the area of the first plate orifice. Each opening may be configured to receive a fixing member that passes from the first face of the plate to the second face of the plate.

The first plate orifice may be a hole between the first and second faces of the plate. The receiving member may be fixedly secured to the plate, e.g. by chemical bond, mechanical fixing, welding or an interference fit. In some examples, the receiving member and the plate may be unitary and/or integrally formed.

The cavity may be configured to receive a bolt. For example, receiving member may have an aperture on its surface that leads into the cavity. The cavity may be, for example, a smooth cavity, a threaded cavity, a toothed cavity and/or a tapered cavity. The cross-sectional area of the tapered cavity may decrease in size as the distance from the aperture of the cavity increases.

In some examples, the aperture of the cavity may at least partially overlap the first plate orifice such that, for example, the cavity is arranged to receive a bolt that has passed through the first plate orifice. In some examples, the aperture of the cavity may at least partially overlap the first plate orifice such that, for example, the cavity is arranged to receive a bolt and direct it through the first plate orifice. The first plate orifice may encircle the cavity of the receiving member, or the aperture may encircle the orifice. The receiving member may abut the plate.

The receiving member is configured to receive and retain a corresponding bolt. For example, the thread or teeth of the cavity may retain a bolt with a corresponding thread or teeth.

The plurality of plate orifices, and/or the further plate orifice, may have one or more of the features described above in relation to the first plate orifice. The further receiving member may have one or more of the features described above in relation to the receiving member. The further aperture may have one or more of the features described above in relation to the aperture.

Each receiving member may have only one aperture.

In this way, the fixing is more durable by preventing the ingress of moisture and detritus into the receiving member in use. In some examples, the receiving member has a cavity with only one aperture that at least partially overlaps the first plate orifice. The only one aperture may be at the end of said cavity. In this way, the fixing is more durable by preventing the ingress of moisture and detritus into the cavity in use.

Each receiving member may have a length defined by its longest dimension and at least eighty percent of this length may extend from one face of the plate. More specifically, this length may extend from only one face of the plate for each receiving member.

In this way, the receiving member may provide a collar above the plate that increases the resistance to turning a bolt retained by the receiving member in a direction out of the plane defined by the plate, but without sacrificing the underlying strength provided by penetration of the receiving member into the substrate.

The plurality of openings are arranged to surround each plate orifice. For example, the plurality of openings may be distributed around each plate orifice. More specifically, the plurality of openings may be equally distributed around each plate orifice.

In this way, loads imparted on a bolt retained within the fixing are distributed around the orifice to mitigate against weak spots in the fixing and reduce the risk of fracturing the substrate.

The protrusions and/or indentations may be oriented radially and/or axially.

The plate may include external protrusions and/or indentations on one face.

In this way, the plate may interact with the substrate to increase friction, and thereby, reduce movement of the apparatus whilst fixing it to the substrate. Moreover, the surface area is increased for enhanced chemical bonding between the one face and the substrate.

Each receiving member may comprise at least one retaining feature at least partially within the cavity, wherein the at least one retaining feature is one or more of a screw thread, a pawl, a protrusion, ridges and/or teeth, and wherein the retaining feature is for engaging features on a corresponding bolt.

In this way, the bolt is retained within the receiving member, and thereby, the reliance on gravity to keep the bolt in the receiving member is removed. Removing the reliance on gravity allows the attachment apparatus to be used in a greater variety of orientations and applications.

The retaining features may be disposed only within the cavity. Alternatively, the retaining features may extend beyond the cavity and into the first plate orifice of an abutted plate. The retaining features may extend out of the orifice and beyond the first plate orifice. For example, a portion of the pawl may be accessible to enable the release of the bolt and/or the threads may sit proud of the aperture of the cavity to form a guide.

According to a second aspect, there is provided a method of attaching a bolt to a substrate using the apparatus, comprising: providing the apparatus of the first aspect; cutting one or more holes in the substrate suitable for receiving each receiving member of the apparatus; inserting the receiving member of the apparatus into the hole; and inserting a mechanical fixing through each of the plurality of openings into the substrate.

In this way, the risk of fracturing a substrate susceptible to fracturing is reduced when securing a bolt thereto.

According to a third aspect there is provided a panel attachment system comprising the attachment apparatus of the first aspect and a flat panel mounting system, the flat panel mounting system comprising: a longitudinal trough having two opposing side walls and a base connected therebetween, wherein the base includes a base orifice, and a bolt is disposed in the base orifice to engage with each receiving member, and wherein the trough is open on a side opposing the base.

**In** this way, the risk of fracturing a substrate susceptible to fracturing is reduced when securing a panel attachment system thereto.

The flat panel mounting system may further comprise: a gripping part for securely holding a section of the flat panel, the gripping part having a contact surface for engaging with a face of the flat panel and/or a first joint surface inclined obliquely to the contact surface, the gripping part locatable within the longitudinal trough with the joint surface at least partially facing the open side of the trough opposing the base; an adjustment part having a first end configured to be engaged with one of the side walls of the trough, the adjustment part having a second joint surface spaced from the first end of the adjustment part by a distance that is adjustable by a user, the second joint surface configured to be arranged in contact with the first joint surface to form a joint, wherein changing the distance between the second joint surface and the first end of the adjustment part may cause: a force to be applied by the second joint surface onto the first joint surface, resulting in the gripping part gripping the panel and urging the panel toward the base of the trough; pivoting of the panel within the trough about an axis parallel to a longitudinal length of the trough; and/or at least one pair of resilient barrier units configured to be placed in the trough at opposing ends of the adjustment part to prevent liquid resin flowing along a length of the trough, and to prevent liquid resin flowing to the bottom of the trough.

The resin may comprise natural plant resin and/or synthetic resin. The resin may comprise a thermosetting plastics material, for example (poly) methyl methacrylate. The resin may comprise a first one of two monomers in a copolymer, the second one of the two monomers may comprise a hardener, for example the resin may comprise a polyester and/or epoxy resin.

The resilient barrier units may be shaped to match an interior profile of the trough to one side a panel therein. The resilience of the barrier units enables the units to match the interior profile of the trough over a range of inclinations of the panel.

The adjustment part may be configured to seal a region within the trough between the pair of resilient barrier units.

The adjustment part may further comprise a resin inlet, for introduction of resin into the region therethrough. The inlet may comprise a hole. The inlet may comprise a tube; the tube may be removable after use, for instance be breaking/cutting off. Each resilient barrier unit may comprise a cellular structure.

The cellular structure may comprise an open and/or closed cellular structure. The cellular structure may comprise a foam. The foam may comprise open cell foam and/or close cell foam. The foam may be a polymer foam. The foam may comprise a sponge.

The gripping part may comprise a single gripping part, at least one gripping part, at least two gripping parts or a plurality of gripping parts.

The adjustment part may comprise a single adjustment part, at least one adjustment part, at least two adjustment parts or a plurality of adjustment parts.

The first end of the adjustment part may be a fixed end, which may be configured to be connected to one of the side walls of the trough. Alternatively, the first end of the adjustment part may be movable, for instance slidable and/or pivotable, against the side wall of the trough. For example, the first end and the side wall may be shaped for mutual engagement. Changing the distance between the second joint surface and the first end of the adjustment part may comprise reducing or increasing the distance.

In this way, a panel may be aligned with its face in a substantially vertical plane, even when the trough is located with its base substantially not horizontal. In particular, up to 10 degrees from horizontal, more particularly up to 5 degrees from horizontal, for instance up to 3 degrees from horizontal.

In addition, the force acting on the panel may have a component acting perpendicular to the face of the panel (which acts to grip the panel) and another component acting substantially parallel to the face of the panel (which urges the panel toward the base of the trough). That is, the panel may be held in the base of the trough by the force of the adjustment part on the first joint surface, thereby increasing stability of the panel.

Furthermore, adjustment of the panel may be made more simply than in prior art methods by means of the adjustment part being more accessible to a user.

The system may be configured such that, when in use, the adjustment part is under tension, and the gripping part may be under compression. The system may be configured such that, when in use, the adjustment part is not under compression. In this way, access to one end of the adjustment part may be easily provided for adjustment; that is, the side wall and the second joint surface each pull in opposing directions on the adjustment member, toward a middle of the adjustment member. In contrast, were the adjustment part under compression when in use, each end of the adjustment member would be obscured by parts of the system providing the compression; that is, the side wall would push on the first end of the adjustment member and an opposing end of the adjustment member would push on the gripping part.

The present invention may be usable with flat panels that have two opposing faces, joined around a perimeter by for instance four or more edges. The faces may define the plane of the panel. The faces are substantially larger than the edges. The present invention may be usable with one or more shims and/or spacers located with a flat panel, for instance, against a face of the flat panel. In particular, a shim/spacer may be placed between the flat panel and the gripping part, such that the gripping part may be used with flat panels having differing thicknesses. Alternatively or additionally, the gripping part may be adjustable for use with flat panels having different thicknesses. In some embodiments, the gripping part may comprise one or more of such shims/spacers. Each shim/spacer may be a flat sheet, which in some circumstances may be tapered or wedged, but is preferably of substantially uniform thickness. The shim/spacer may be made of metal, aluminium, silicone, rubber, synthetic rubber, wood, plastic material, composite material or any other suitable material. The shim/spacer may be approximately 1mm, 2mm, 2.5mm, 3mm, 4mm or 5mm thick (i.e. between major faces). A single or multiple shims/spaces may be used adjacent to a flat panel.

The trough may have a longitudinal axis, and may be substantially longer in a length parallel to the longitudinal axis than in a width or depth at right angles to the longitudinal axis. The side walls may extend along respective sides of the trough, parallel to the longitudinal axis. Similarly, the base may extend between the side walls, also substantially parallel to the longitudinal axis. Ends of the trough may be open or closed; that is, the ends substantially perpendicular to the side walls, the base and the longitudinal axis. The trough may be open on a side substantially opposing the base; that is, the side walls may be connected to one another at the base, and optionally the ends, but not at substantially any additional point. The open side opposing the base may be referred to as the top, even when the trough is located on a surface that is substantially non-horizontal, or is affixed to a surface at a non-zero angle to the base of the trough. The side walls may be spaced from one another. The trough may be integrally formed, formed by extrusion, moulding, or may be assembled from component parts, for instance by welding, bolting, screwing, gluing, etc. The trough may be a channel.

The trough may have a tapered cross-section; that is an internal width of the trough adjacent to the base may be less than an internal width of the trough adjacent to the open top. In particular, an internal width of the trough approximately mid-way up may be more than an internal width of the trough adjacent to the base. The gripping part may be configured to be wedgeable into the trough substantially adjacent to the base.

The trough may be configured to be removably or substantially permanently attachable to a surface. The trough may be configured to be set into a trench in a surface, such that the open side of the trough is substantially level with the surface. The trough may be attached to a surface such that it is horizontal; however, the present invention is capable of use when the trough is attached to a surface such that it is substantially non-horizontal.

The gripping part may securely hold a periphery of a flat panel, for instance a portion of the flat panel adjacent to a lower edge of the panel. The gripping part may engage a face of the flat panel immediately to a lower edge of the panel.

The gripping part may comprise a relatively high-friction surface for securely holding a section of the flat panel. The gripping part may comprise rubber material, synthetic rubber material, silicone rubber material and/or any other suitable form of resilient material. The contact surface may be substantially planar and/or flat. The contact surface may be substantially smooth; however, in preferred embodiments the contact surface is textured. For instance, the contact surface may comprise ridges, protuberances and/or dimples.

The first joint surface may be substantially non-parallel to the contact surface. The first joint surface may be substantially non-perpendicular to the contact surface. The first joint surface may be at an angle of between 20 and 70 degrees to the contact surface, and this angle may be measured about an axis that is substantially parallel to the longitudinal length of the trough. The angle may be between 30 and 60 degrees, in particular between 35 and 55 degrees, more particularly between 40 and 50 degrees, for example, approximately 40, 45 or 50 degrees.

The first and/or second joint surface may be a relatively low-friction surface; that is, the first and/or second joint surfaces may have a substantially lower friction than the contact surface.

In use, the joint surface may be facing upwards, and/or may be seen through the open side of the trough opposing the base (e.g. seen through the top of the trough).

The term 'connected' in relation to the adjustment part and the side walls is to be interpreted as substantially more than mere contact of the parts together. The adjustment part may be secured to the side wall, for instance by a cooperating engaging mechanism. The adjustment part may be removably or substantially permanently connected to the side wall of the trough. The adjustment part may be connected to the side walls by cooperating hooking parts, screw-threading parts, or by other suitable connection parts. The adjustment part may be integrally formed with the side walls, or may be glued, welded, or similarly affixed to the side wall. The adjustment part may be slidably received in a slot in the side wall, for instance by sliding in a direction substantially perpendicular to a direction in which the second joint surface is movable toward/away from the fixed end.

The distance between the second joint surface and the fixed end of the adjustment part may be configured to be adjusted with a screw-thread arrangement. For instance, the adjustment part may comprise a threaded shank and a cooperatively threaded nut may be provided on the shank such that rotation of the nut about the shank results in movement of the second joint surface along the shank. For example, the second joint surface may be provided on a sliding part having a central bore through which the threaded shank passes, and a nut may limit movement of the sliding part along the shank.

The adjustment part may comprises: an externally threaded shank having a head; a sliding part arranged to be slidably receivable on the threaded shank, the sliding part comprising the second joint surface arranged to face at least partially toward the fixed end of the adjustment part; and/or an internally threaded nut; and the sliding part may be biased away from the fixed end by the first joint surface, and relative rotation of the nut and the head about an axis of the shank may cause movement of the sliding part with respect to the fixed end.

The head may be located at the fixed end such that rotation of the nut moves the sliding part along the threaded shank.

The nut may be located at the fixed end such that rotation of the head moves the sliding part with the head in relation to the fixed end.

In this way, a portion of the threaded shank between the head and the nut is under tension.

The second joint surface may be arrangable in mere contact with the first joint surface to form a joint. The second joint surface may not be connected to the first joint surface by any means other than mere contact. The second joint surface may be arranged in contact with the first joint surface to form a planar joint; that is, a joint with one rotational and two translational degrees of freedom. The first joint surface and/or the second joint surface may be further constrained such that the first and second joint surfaces may move with respect to each other substantially only in one translational degree of freedom. The first and/or second joint surface may be substantially flat; however, in some embodiments, the first and/or second joint surfaces may be substantially curved, such that relative movement between the two joint surfaces corresponds to relative rotation about a common axis. The joint may operate as a revolute, pin or hinge joint.

The system may comprise at least one pair of opposed gripping parts for securely holding a section of the flat panel, and may comprise at least one pair of adjustment parts, each adjustment part comprising a respective second joint surface arrangable in contact with a respective first joint surface of one of the pair of gripping parts, to form a respective joint, wherein reducing the distance between the second joint surface and the fixed end of one of the pair of adjustment parts, and/or increasing the distance between the second joint surface and the fixed end of the other of the pair of adjustment parts, may result in pivoting of the panel within the trough about an axis parallel to a longitudinal length of the trough. The system may comprise a plurality of pairs of opposed gripping parts spaced along the trough.

The opposed gripping parts may comprise a single gripping part extending around the panel. Alternatively or additionally, a series of gripping parts on one side of a panel may comprise a single gripping part. Similarly, a series of adjustment parts (and or components thereof) may comprise a single adjustment part (and/or a component thereof).

The resilient barrier units may be placed in the trough prior to, or after the step of: attaching the trough to a surface; engaging the contact surface of the gripping part with a face of the flat panel; securely holding a section of the flat panel with the gripping part; locating the gripping part within the longitudinal trough with the joint surface at least partially facing the open side of the trough opposing the base; connecting engaging at least one the adjustment part at its fixed first end to one of the side walls of the trough; arranging the second joint surface in contact with the first joint surface to form a joint; reducing changing the distance between the second joint surface and the fixed end of the adjustment part; applying a force being with the second joint surface onto the first joint surface; gripping the panel with the gripping part; urging the panel with the gripping part toward the base of the trough; and/or pivoting of the panel within the trough about an axis parallel to a longitudinal length of the trough.

For robustness, resin may be inserted on opposing sides of the panel to be secured. However, where robustness is only required in one rotational direction, resin may be inserted on only one side of the panel. **In** this way, removal of the panel after fixing may be possible, by merely removing the securing system on a single side of the panel.

The region in which the resin is inserted may be bounded by the barrier units in an axial direction, the adjustment part in an upward direction, and/or the trough and the gripping part in a lateral direction. **In** particular, in use, the resin may not come into contact with the panel, and thus the resin is not bonded to the panel. **In** some examples, the barrier units may be arranged to prevent resin flowing to one or more orifices in the base of the trough such that they remain accessible. That is, resin may be bounded by the barrier units within a region containing no base orifices, and between base orifices.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.
Figure 1 shows an exploded view of a panel support system.
Figure 2 shows a perspective view of the panel support system secured with resin.
Figure 3 shows a cross-sectional view of the panel support system secured with resin.
Figures 4A and 4B show perspective views of the attachment apparatus in different orientations.
Figure 5 shows a schematic representation of the attachment apparatus attaching a flat panel mounting system to a substrate using a bolt.

The present invention will be described with respect to certain drawings but the invention is not limited thereto but only by the claims. The drawings described are only schematic and are non-limiting. Each drawing may not include all of the features of the invention and therefore should not necessarily be considered to be an embodiment of the invention. In the drawings, the size of some of the elements may be exaggerated and not drawn to scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that operation is capable in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that operation is capable in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "an embodiment" or "an aspect" means that a particular feature, structure or characteristic described in connection with the embodiment or aspect is included in at least one embodiment or aspect of the present invention. Thus, appearances of the phrases "in one embodiment", "in an embodiment", or "in an aspect" in various places throughout this specification are not necessarily all referring to the same embodiment or aspect, but may refer to different embodiments or aspects.

Similarly, it should be appreciated that in the description various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Moreover, the description of any individual drawing or aspect should not necessarily be considered to be an embodiment of the invention. Rather, as the following claims reflect, inventive aspects lie in fewer than all features of a single foregoing disclosed embodiment. Thus, the claims following the detailed description are hereby expressly incorporated into this detailed description, with each claim standing on its own as a separate embodiment of this invention.

In the description provided herein, numerous specific details are set forth. However, it is understood that embodiments of the invention may be practised without these specific details. In other instances, well-known methods, structures and techniques have not been shown in detail in order not to obscure an understanding of this description.

In the discussion of the invention, unless stated to the contrary, the disclosure of alternative values for the upper or lower limit of the permitted range of a parameter, coupled with an indication that one of said values is more highly preferred than the other, is to be construed as an implied statement that each intermediate value of said parameter, lying between the more preferred and the less preferred of said alternatives, is itself preferred to said less preferred value and also to each value lying between said less preferred value and said intermediate value.

The use of the term "at least one" may mean only one in certain circumstances.

The principles of the invention will now be described by a detailed description of at least one drawing relating to exemplary features of the invention. It is clear that other arrangements can be configured according to the knowledge of persons skilled in the art without departing from the underlying concept or technical teaching of the invention, the invention being limited only by the terms of the appended claims.

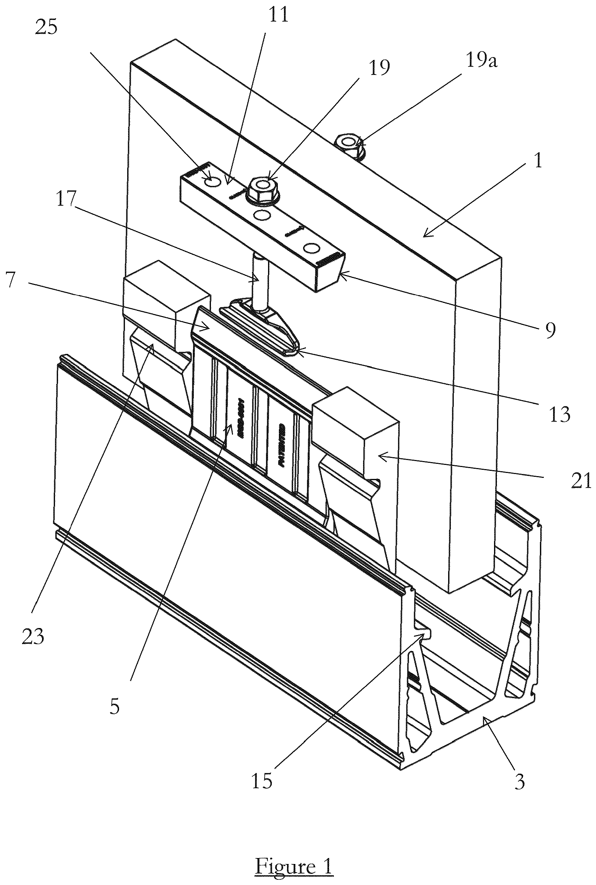

Figure 1 shows an exploded view of a panel 1 to be held in a trough 3, by a gripping part 5 that is arranged with a flat surface thereof engaged with a face of the panel 1 and an upwardly-facing oblique surface 7 angled away from the panel 1.

A corresponding oblique face 9 of an attachment unit 11 is arranged for engagement with the oblique surface 7. A hook 13 is configured to engage with a corresponding lip 15 within the trough 3, the hook 13 being coupled to attachment unit 11 via an externally threaded shaft 17 (threads not shown for clarity) and a corresponding internally threaded nut 19. Tightening of the nut 19 causes the hook 13 to be drawn toward the attachment unit 11. When the hook is engaged with the lip 15, tightening of the nut 19 draws the attachment unit 11 down into the trough 3, pushing the oblique face 9 against the oblique surface 7 and acting to urge the panel 1 into the base of the trough 3 and away from the lip 15 in a lateral direction.

A similar arrangement on an opposing side of the panel 1 pushes back in the opposite lateral direction, thereby clamping the panel 1 in the trough. Only nut 19a of the similar arrangement can be seen in figure 1.

Two resilient foam wedges 21 are provided at each end of the attachment unit, and are shaped to conform to the inner profile of the trough 3 (including cut-out sections 23 to receive the lip 15). The exact shape of the wedges 21 is unimportant, as they are configured to conform to the internal shape of the trough 3 and panel 1, respectively.

Through holes 25 in the attachment unit 11 are provided to permit injection of liquid resin into the void beneath the attachment unit 11 and bounded by the gripping part 5, trough 3 and wedges 21. The attachment unit 11 shows two through holes 25, one at each end thereof to permit fluid flow around both axial ends of the hook 13; however, a single hole is also considered.

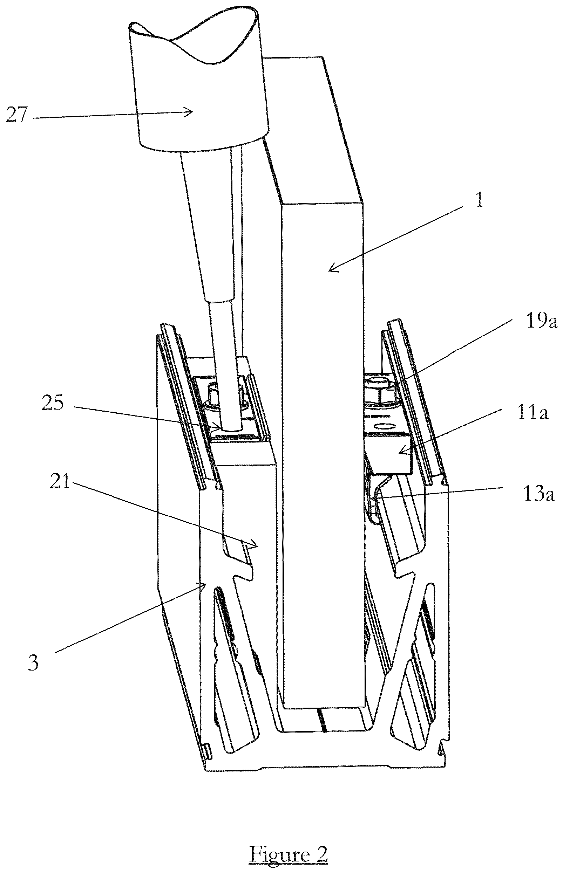

Figure 2 shows a perspective view of the assembled panel support system, with resin being injected into the void via through hole 25 from reservoir 27.

The nut 19a, attachment unit 11a and hook 13a of the similar arrangement on the opposing side of the panel 1 can also be seen in figure 2. There are no wedges 21 on the opposing side of the panel 1, and resin is not used.

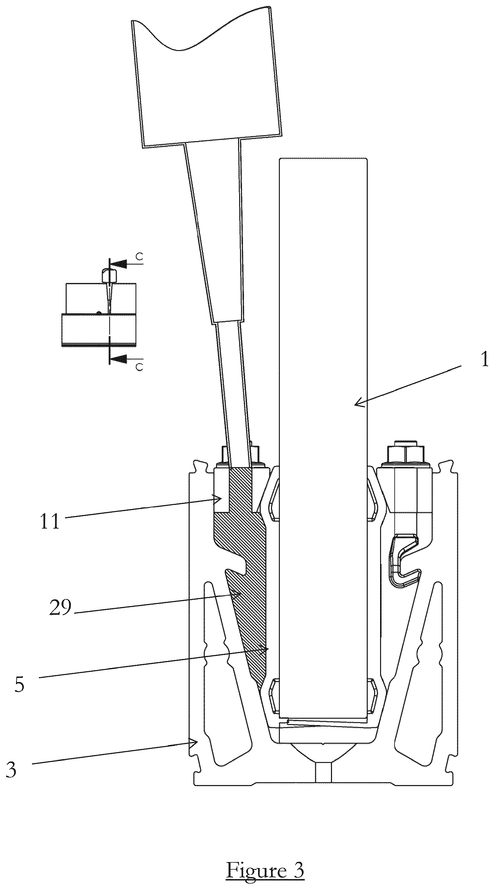

Figure 3 shows a cross-sectional view along C-C of the panel support system. Resin 29 can be seen to fill the void between the attachment unit 11, gripping part 5, trough 3 and wedges (not shown). In this arrangement, the resin 29 does not contact the panel 1 or the base of trough.

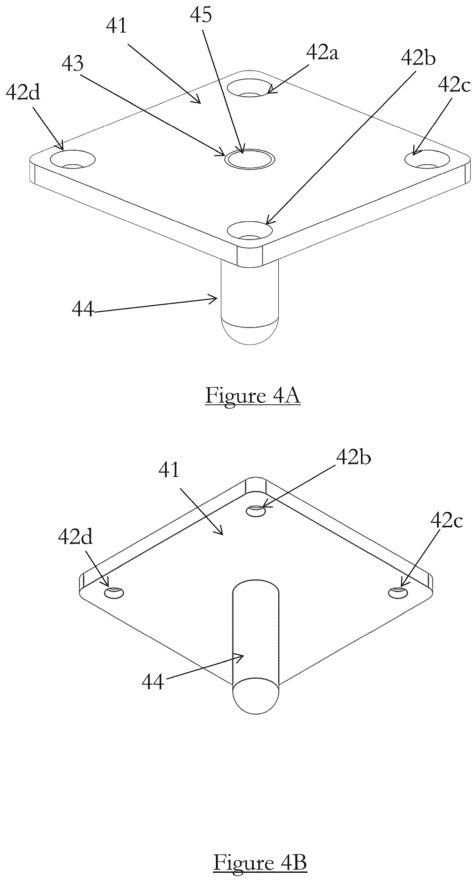

Figure 4A shows a perspective view of the attachment apparatus in a first orientation. Figure 4B shows a perspective view of the attachment apparatus in another orientation. The figure shows an apparatus comprising a plate 41 with a plurality of openings 42a-d therethrough. Each opening 42a-d of the plurality of openings is configured to receive a fixing member. The plate 41 includes a plate orifice 43 therethrough. A receiving member 44 is fixedly secured to the plate 41. The receiving member 44 has a cavity with an aperture 45 at one end that overlaps the plate orifice 43. The receiving member 44 is configured to receive and retain a corresponding bolt such that the corresponding bolt is also disposed within the aperture 45, cavity and the plate orifice 43.

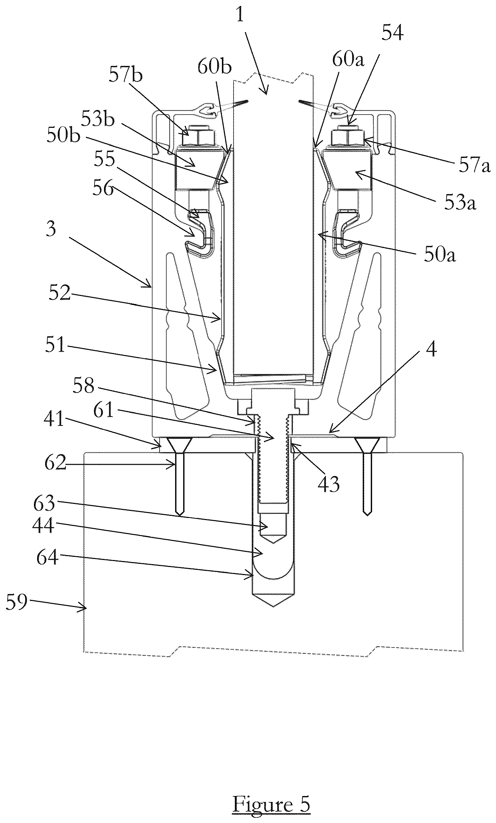

Figure 5 shows a schematic representation of the attachment apparatus attaching a flat panel mounting system to a substrate using a bolt 61.

A panel 1 is supported in a trough 3 having a base 4. A portion of the lower edge of the panel is gripped by gripping parts 50, which are urged together and into a tapering slot 51 in the base 4 of the trough 3 by adjustment mechanisms 52. A block 53 is received on two threaded shafts 54, such that it may slide thereon via through holes in the block 53. Lower ends of the threaded shafts 54 are connected to an elongate hook 55 that is configured to cooperate with projection 56 on an interior of the side wall. Nuts 57 on an upper end of the threaded shafts 54 maintain the block 53 thereon. A hole, or base orifice 58, is provided in the base of the trough for securing the trough to a substrate 59.

The nuts 57a, 57b, have been tightened equally such that both blocks 53a, 53b, push against the surfaces 60a, 60b of the gripping parts 50a, 50b. The blocks 53a, 53b are held against the surfaces 60a, 60b by the elongate hooks 55 pulling on the projections 56. The force through the surfaces 60a, 60b acts to push the panel 1 down into the tapering slot 51, and to clamp the panel 1 from either side adjacent to the open top of the trough. Uneven adjustment of the nuts 57a, 57b enables the angle of the panel 1 to be adjusted. For example, if the nut on the right-hand side 57a is tightened more than the nut on the left-hand side 57b, such that the block on the right-hand side 53a is lower than the block on the left-hand side 53a, the panel 1 will lean to the left. That is, the panel 1 will lean away from the tightest nut 57a, 57b.

The flat panel mounting system is attached to the substrate 59 with an attachment apparatus. The attachment apparatus comprises a plate 41 with a plurality of openings. therethrough. Each opening of the plurality of openings has a fixing member 62 therethrough. The plate 41 includes a plate orifice 43 therethrough. A receiving member 44 is fixedly secured to the plate 41. The receiving member 44 is inserted into a hole 64 in the substrate 59. The receiving member 44 has a cavity with an aperture at one end that overlaps the plate orifice 43. The receiving member 44 is configured to receive and retain a corresponding bolt 61 such that the corresponding bolt 61 is also disposed within the aperture, cavity 63 and the plate orifice.

## Claims

1. An attachment apparatus for enabling a bolt (61) to be secured to a substrate that is susceptible to fracturing, the apparatus comprising:
a plate (41) with a plurality of openings (42a, 42b, 42c, 42d) therethrough, wherein each opening is configured to receive a fixing member, wherein the plate includes a plurality of plate orifices (43) therethrough, wherein the plurality of plate orifices includes a first plate orifice and a further plate orifice, and wherein the plurality of openings include at least two openings in addition to two openings per orifice of the plurality of plate orifices;
a receiving member (44) fixedly secured to the plate, the receiving member having a cavity with an aperture (45) at one end that at least partially overlaps the first plate orifice, wherein the receiving member is configured to receive and retain a corresponding bolt such that the corresponding bolt is disposed within the aperture, cavity and the first plate orifice; and
a further receiving member with a further aperture at one end that at least partially overlaps the further plate orifice, and wherein the further receiving member is fixedly secured to the plate,
wherein each receiving member includes external protrusions and/or external indentations to form an interference fit with the substrate.

2. The attachment apparatus of any preceding claim, wherein each receiving member (44) has only one aperture.

3. The attachment apparatus of any preceding claim, wherein each receiving member (44) has a length defined by its longest dimension and at least eighty percent of this length extends from one face of the plate (41).

4. The attachment apparatus of any preceding claim, wherein the plurality of openings (42a, 42b, 42c, 42d) are arranged to surround each plate orifice (43).

5. The attachment apparatus of any preceding claim, wherein the plate (41) includes external protrusions and/or indentations on one face.

6. The attachment apparatus of any preceding claim, wherein each receiving member (44) comprises at least one retaining feature at least partially within the cavity, wherein the at least one retaining feature is one or more of a screw thread, a pawl, a protrusion, ridges and/or teeth, and wherein the retaining feature is for engaging features on a corresponding bolt.

7. A method of attaching a bolt (61) to a substrate using the apparatus of any preceding claim, comprising:
providing the apparatus of any preceding claim;
cutting one or more holes in the substrate suitable for receiving each receiving member (44) of the apparatus; inserting the receiving member of the apparatus into the hole; and
inserting a mechanical fixing through each of the plurality of openings (42a, 42b, 42c, 42d) into the substrate.

8. A panel attachment system comprising the apparatus of any preceding claim and a flat panel mounting system, the flat panel mounting system comprising:
A longitudinal trough having two opposing side walls and a base connected therebetween, wherein the base includes a base orifice, and a bolt (61) is disposed in the base orifice to engage with each receiving member (44), and wherein the trough is open on a side opposing the base.

## Patentansprüche

1. Ein Befestigungsapparat zum Befestigen eines Bolzens (61) an einem Substrat, das zum Brechen neigt, umfassend:
eine Platte (41) mit einer Vielzahl von Öffnungen (42a, 42b, 42c, 42d) durch diese, wobei jede Öffnung konfiguriert ist, um ein Befestigungselement aufzunehmen, wobei die Platte eine Vielzahl von Plattenöffnungen (43) durch diese aufweist, wobei die Vielzahl von Plattenöffnungen eine erste Plattenöffnung und eine weitere Plattenöffnung umfasst, und wobei die Vielzahl von Öffnungen mindestens zwei Öffnungen zusätzlich zu zwei Öffnungen pro Öffnung der Vielzahl von Plattenöffnungen umfasst;
ein Aufnahmeelement (44), das fest mit der Platte verbunden ist, das Aufnahmeelement hat eine Kavität mit einer Öffnung (45) an einem Ende, die zumindest teilweise die erste Plattenöffnung überlappt, wobei das Aufnahmeelement konfiguriert ist, um einen entsprechenden Bolzen aufzunehmen und zu halten, sodass der entsprechende Bolzen innerhalb der Öffnung, der Kavität und der ersten Plattenöffnung angeordnet ist; und
ein weiteres Aufnahmeelement mit einer weiteren Öffnung an einem Ende, die zumindest teilweise die weitere Plattenöffnung überlappt, und wobei das weitere Aufnahmeelement fest mit der Platte verbunden ist,
wobei jedes Aufnahmeelement äußere Vorsprünge und/oder äußere Vertiefungen umfasst, die zur Bildung eines Presssitzes mit dem Substrat dienen.

2. Befestigungsapparat nach einem der vorhergehenden Ansprüche, wobei jedes Aufnahmeelement (44) nur eine Öffnung aufweist.

3. Befestigungsapparat nach einem der vorhergehenden Ansprüche, wobei jedes Aufnahmeelement (44) eine Länge definiert durch seine längste Dimension aufweist und mindestens achtzig Prozent dieser Länge sich von einer Seite der Platte (41) aus erstreckt.

4. Befestigungsapparat nach einem der vorhergehenden Ansprüche, wobei die Vielzahl von Öffnungen (42a, 42b, 42c, 42d) so angeordnet ist, dass sie jede Plattenöffnung (43) umgeben.

5. Befestigungsapparat nach einem der vorhergehenden Ansprüche, wobei die Platte (41) äußere Vorsprünge und/oder Vertiefungen auf einer Seite aufweist.

6. Befestigungsapparat nach einem der vorhergehenden Ansprüche, wobei jedes Aufnahmeelement (44) mindestens ein Halteelement zumindest teilweise innerhalb der Kavität umfasst, wobei das mindestens eine Halteelement eines oder mehrere von einem Schraubengewinde, einer Sperrklinke, einem Vorsprung, Rippen und/oder Zähnen ist, und wobei das Halteelement zum Eingreifen mit Merkmalen an einem entsprechenden Bolzen dient.

7. Ein Verfahren zum Befestigen eines Bolzens (61) an einem Substrat unter Verwendung des Apparats nach einem der vorhergehenden Ansprüche, umfassend:
Bereitstellen des Apparats nach einem der vorhergehenden Ansprüche;
Schneiden von einem oder mehreren Löchern in das Substrat, die geeignet sind, um jedes Aufnahmeelement (44) des Apparats aufzunehmen;
Einsetzen des Aufnahmeelements des Apparats in das Loch; und
Einsetzen eines mechanischen Befestigungselements durch jede der Vielzahl von Öffnungen (42a, 42b, 42c, 42d) in das Substrat.

8. Ein Plattenbefestigungssystem umfassend den Apparat nach einem der vorhergehenden Ansprüche und ein Flachplatten-Montagesystem, wobei das Flachplatten-Montagesystem umfasst:
eine längliche Rinne mit zwei gegenüberliegenden Seitenwänden und einem dazwischen verbundenen Boden, wobei der Boden eine Bodenöffnung umfasst, und ein Bolzen (61) in der Bodenöffnung angeordnet ist, um mit jedem Aufnahmeelement (44) zu interagieren, und wobei die Rinne auf einer dem Boden gegenüberliegenden Seite offen ist.

## Revendications

1. - Appareil de fixation permettant de solidariser un boulon (61) à un substrat qui est susceptible de se fracturer, l'appareil comprenant :
une plaque (41) traversée par une pluralité d'ouvertures (42a, 42b, 42c, 42d), chaque ouverture étant configurée pour recevoir un élément de fixation, la plaque étant traversée par une pluralité d'orifices de plaque (43), la pluralité d'orifices de plaque comprenant un premier orifice de plaque et un orifice de plaque supplémentaire, et la pluralité d'ouvertures comprenant au moins deux ouvertures en plus de deux ouvertures par orifice de la pluralité d'orifices de plaque ;
un élément de réception (44) solidarisé de manière fixe à la plaque, l'élément de réception ayant une cavité avec une fenêtre (45) à une extrémité qui chevauche au moins partiellement le premier orifice de plaque, l'élément de réception étant configuré pour recevoir et retenir un boulon correspondant de telle sorte que le boulon correspondant est disposé à l'intérieur de la fenêtre, de la cavité et du premier orifice de plaque ; et
un élément de réception supplémentaire avec une fenêtre supplémentaire à une extrémité qui chevauche au moins partiellement l'orifice de plaque supplémentaire, et l'élément de réception supplémentaire étant solidarisé de manière fixe à la plaque,
chaque élément de réception comprenant des saillies externes et/ou des renfoncements externes pour former un ajustement serré avec le substrat.

2. - Appareil de fixation selon l'une quelconque des revendications précédentes, dans lequel chaque élément de réception (44) n'a qu'une seule fenêtre.

3. - Appareil de fixation selon l'une quelconque des revendications précédentes, dans lequel chaque élément de réception (44) a une longueur définie par sa dimension la plus longue et au moins quatre-vingt pourcent de cette longueur s'étend à partir d'une face de la plaque (41).

4. - Appareil de fixation selon l'une quelconque des revendications précédentes, dans lequel la pluralité d'ouvertures (42a, 42b, 42c, 42d) sont agencées pour entourer chaque orifice de plaque (43).

5. - Appareil de fixation selon l'une quelconque des revendications précédentes, dans lequel la plaque (41) comporte des saillies et/ou renfoncements externes sur une face.

6. - Appareil de fixation selon l'une quelconque des revendications précédentes, dans lequel chaque élément de réception (44) comprend au moins une caractéristique de retenue au moins partiellement à l'intérieur de la cavité, l'au moins une caractéristique de retenue étant un ou plusieurs parmi un filetage, un cliquet, une saillie, des crêtes et/ou des dents, et la caractéristique de retenue est destinée à s'engager avec des caractéristiques sur un boulon correspondant.

7. - Procédé de fixation d'un boulon (61) à un substrat à l'aide de l'appareil selon l'une quelconque des revendications précédentes, comprenant :
disposer l'appareil selon l'une quelconque des revendications précédentes;
découper un ou plusieurs trous dans le substrat, appropriés pour recevoir chaque élément de réception (44) de l'appareil ;
introduire l'élément de réception de l'appareil dans le trou ; et
introduire une fixation mécanique à travers chacune de la pluralité d'ouvertures (42a, 42b, 42c, 42d) dans le substrat.

8. - Système de fixation de panneau comprenant l'appareil selon l'une quelconque des revendications précédentes et un système de montage de panneau plat, le système de montage de panneau plat comprenant :
une gouttière longitudinale ayant deux parois latérales opposées et une base reliée entre elles, la base comprenant un orifice de base, et un boulon (61) étant disposé dans l'orifice de base pour s'engager avec chaque élément de réception (44), et la gouttière étant ouverte sur un côté opposé à la base.
